# EUROPÄISCHE PATENTSCHRIFT

(11) **EP 0 846 991 B1**
(45) Veröffentlichungstag und Bekanntmachung des Hinweises auf die Patenterteilung: **02.06.1999**
(21) Anmeldenummer: 97120783.2
(22) Anmeldetag: 27.11.1997
(51) Int. Cl.: G05B 19/042

(54) **Zentrale Steuer- und Überwachungseinrichtung für Haushaltsgeräte mit drahtloser Anzeigeeinheit**
Central control and monitoring apparatus for household appliances with wireless display unit
Dispositif centralisé de commande et de surveillance pour appareils ménagers avec unité d'affichage sans fil

(30) Priorität: 04.12.1996 DE 19650309
(43) Veröffentlichungstag der Anmeldung: 10.06.1998
(73) Patentinhaber: Miele & Cie. GmbH & Co., D-33332 Gütersloh (DE)
(72) Erfinder: Hüttemann, Wilfried, 33739 Bielefeld 15 (DE)

(56) Entgegenhaltungen:
- EP-A- 0 620 631
- EP-A- 0 742 308
- US-A- 5 352 957

## Beschreibung

Zentrale Steuer- und Überwachungseinrichtung für Haushaltgeräte wie Waschmaschinen, Wäschetrockner, Herde, Kühlschränke oder Geschirrspülmaschinen, welche mit einer elektronischen Programmsteuerung ausgestattet sind, wobei die Haushaltgeräte untereinander und mit einem zentralen Leitrechner über eine Datenübertragungseinrichtung verbunden sind und wobei durch den Leitrechner Programm- und Gerätedaten aus den Programmsteuerungen abrufbar sind.

Eine solche Überwachungseinrichtung ist aus der DE 34 04 211 A1 bekannt. Dabei werden verschiedene Haushaltsgeräte in einem sog. Homebus-System vernetzt, um diese dann unabhängig vom Aufstellungsort kontrollieren zu können. Diese Kontrolle erfolgt über einen an das Homebus-System angeschlossenen Leitrechner (EIB) oder über eine spezielle Anzeigevorrichtung (DE 34 04 211 A1, s. a. HEA Bilderdienst 3-8-1 bis 3-8-3, Serie: "Hausleittechnik" Oktober 89). Nachteilig bei den vorgenannten Kontrollsystemen war der Umstand, daß der Bildschirm des Leitrechner nur an seinem Aufstellungsort einsehbar ist, so daß eine dezentrale, vom Leitrechner unabhängigeAnzeige des Programmfortschritts der verschiedenen Geräte nicht möglich ist.

Weiterhin sind aus der EP 742 308 A1 Haushaltgeräte mit einer externen Anzeigevorrichtung bekannt, bei denen jedem Haushaltgerät ein Sender zugeordnet ist, der Daten des Haushaltgerätes, in der Regel Programm- und Gerätedaten an einen batterie- oder akkugespeisten Empfänger in der Anzeigevorrichtung drahtlos übermittelt. Aus der EP 0 742 308 A ist ein Steuersystem für Haushaltgeräte bekannt, wovon jedes über eine eigene elektronische Programmsteuerung verfügt. Über eine Infrarot-Sende- und Empfangseinrichtung ist jedes Haushaltgerät mit einer zentralen Steuereinrichtung verbunden, die die einzelnen Haushaltgeräte gemäß vorgebbarer Priorität und Stromverbrauch einschaltet. Es ist jedoch nicht möglich, solche Haushaltgeräte in ein bereits bestehendes Homebus-System zu integrieren.

Der Erfindung stellt sich somit das Problem, eine Überwachungseinrichtung für Haushaltsgeräte zu offenbaren, die einerseits in einem Homebus-System verbunden sind, mit der andererseits aber eine weitgehend ortsunabhängige Kontrolle der Haushaltsgeräte ermöglicht wird.

Erfindungsgemäß wird dieses Problem durch eine Überwachungseinrichtung mit den Merkmalen des unabhängigen Anspruch 1 gelöst. Vorteilhafte Ausgestaltungen ergeben sich aus den nachfolgenden Unteransprüchen.

Ein Ausführungsbeispiel der Erfindung ist anhand einer Zeichnung rein schematisch dargestellt und wird nachfolgend näher beschrieben:

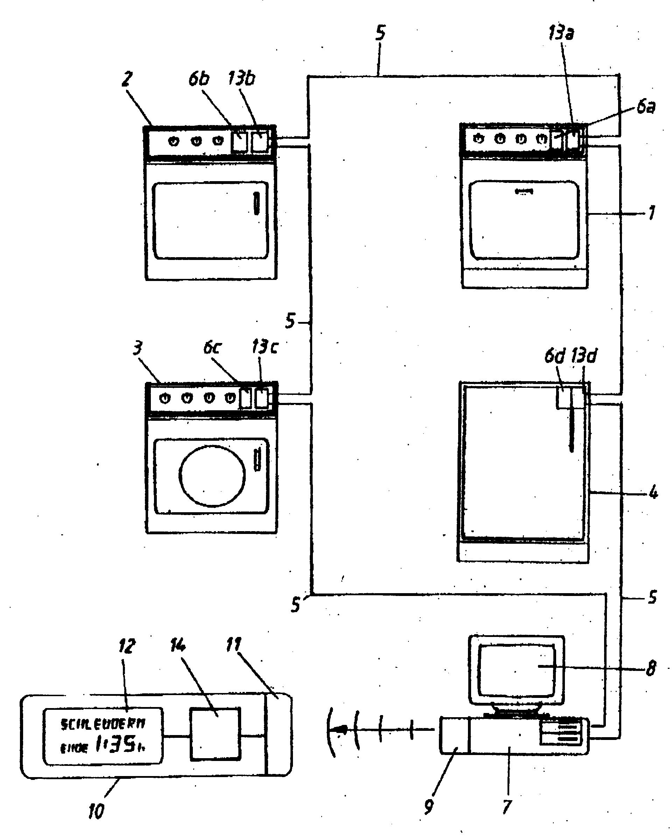

Die Zeichnung zeigt vier verschiedene Haushaltgeräte einen Herd (1), einen Wäschetrockner (2), eine Waschmaschine (3) und einen Kühlschrank (4), die in bekannter Weise untereinander und mit einem Leitrechner (7) über eine Datenübertragungseinrichtung verbunden sind. Zur Datenübertragung wird das Starkstromnetz (5), an das die Geräte zur Stromversorgung angeschlossen sind, als Informationsträger verwendet. Hierzu wird dann der 50-Hz-Netzspannung eine modulierte Trägerfrequenz überlagert. Alternativ dazu können mit dem Stromnetz separate Datenleitungen verlegt werden, außerdem ist eine drahtlose Datenübertragung durch Infrarotsender zwischen den Haushaltsgeräten und dem Leitrechner denkbar.

Die Haushaltgeräte besitzen elektronische Mikroprozessorsteuerungen (6a-d), denen nichtflüchtige Speicher, E²Prom's (13a-d), zugeordnet sind. Aus diesen E²Prom's (13a-d) können über das Starkstromnetz (5) Programm- und Gerätedaten (Programmstatus, Restlaufzeit, Programmfehler, Betriebsstunden) abgerufen werden und am Bildschirm (8) des zentralen Leitrechners (7) dargestellt werden. Der Leitrechner (7), beispielsweise ein PC, ist mit einem Sender (9) gekoppelt oder besitzt einen integrierten Sender (9). Von dort werden die Daten drahtlos an eine aus der EP 742308 A1 bekannte batterie- oder akkubetriebene Anzeigevorrichtung (10) übermittelt.

In der Anzeigevorrichtung ist ein Empfänger (11) vorhanden. Weiterhin besitzt sie ein LC-Display (12), dessen einzeln ansteuerbaren Segmente die Darstellung von Text- und/oder Zeitinformationen ermöglichen. Außerdem kann der Gerätetyp, ein Symbol für die Verbindung zum Sender und bei Unterspannung der Ladezustand eines Akkus darsteilbar sein. Die Textzeile kann Informationen über Programmzustände oder aufgetretene Fehler während des Programmablaufs enthalten. Mit der Zeitinformation ist die restliche Programmlaufzeit darstellbar. Zur Darstellung auf dem LC-Display (12) werden die aus den E²Proms (13a-d) übermittelten Daten durch eine interne Steuerung (14) in der Anzeigevorrichtung (10) aufbereitet. Alternativ hierzu ist eine Aufbereitung der Daten Im Leitrechner (7) möglich.

## Patentansprüche

1. Zentrale Steuer- und Überwachungseinrichtung für Haushaltgeräte wie Waschmaschinen (3), Wäschetrockner (2), Herde (1), Kühlschränke (4) oder Geschirrspülmaschinen, welche mit einer elektronischen Programmsteuerung (6a-d) ausgestattet sind, wobei die Haushaltgeräte (1,2,3,4) untereinander und mit einem zentralen Leitrechner(7) über eine Datenübertragungseinrichtung (5) verbunden sind und wobei durch den Leitrechner (7) Programm- und Gerätedaten aus den Programmsteuerungen (6a-d) abrufbar sind,
dadurch gekennzeichnet,
daß im Leitrechner (7) eine Sendeeinrichtung (9) zur drahtlosen Übertragung der Daten angeordnet ist, welche mit einem Empfänger (11) einer Anzeigevorrichtung (10) in Funkverbindung steht.

2. Zentrale Steuer- und Überwachungseinrichtung für Haushaltgeräte (1,2,3,4) nach Anspruch 1,
dadurch gekennzeichnet,
daß die Anzeigevorrichtung eine Vorrichtung (14) zur Aufbereitung der empfangenen Daten beinhaltet.

3. Zentrale Steuer- und Überwachungseinrichtung für Haushaltgeräte (1,2,3,4) nach Anspruch 1,
dadurch gekennzeichnet,
daß der Leitrechner (7) eine Steuereinheit zur Aufbereitung der empfangenen Daten zugeordnet ist.

4. Zentrale Steuer- und Überwachungseinrichtung für Haushaltgeräte (1,2,3,4) nach Anspruch 3,
dadurch gekennzeichnet,
daß der Leitrechner als Personal Computer (7,8) mit integriertem Sender (9) ausgebildet ist.

5. Zentrale Steuer- und Überwachungseinrichtung für Haushaltgeräte (1,2,3,4) nach mindestens einem der Ansprüche 1 bis 4,
dadurch gekennzeichnet,
daß als Datenübertragungseinrichtung das Starkstromnetz (5) zu Stromversorgung der Haushaltgeräte verwendet wird, wobei der dort fließenden Netzspannung eine modulierte Trägerfrequenz überlagert wird.

6. Zentrale Steuer- und Überwachungseinrichtung für Haushaltgeräte (1,2,3,4) nach mindestens einem der Ansprüche 1 bis 4,
dadurch gekennzeichnet,
daß als Datenübertragungseinrichtung eine zusätzliche Datenleitung verwendet wird.

7. Zentrale Steuer- und Überwachungseinrichtung für Haushaltgeräte (1,2,3,4) nach mindestens einem der Ansprüche 1 bis 4,
dadurch gekennzeichnet,
daß als Datenübertragungseinrichtung eine drahtlose Übertragungseinrichtung in Form einer Infrarot- oder Funk-Sende-/Empfangseinrichtung verwendet wird.

## Claims

1. Central controlling and monitoring installation for domestic appliances such as washing machines (3), tumble dryers (2), cookers (1), refrigerators (4) or dishwashers, which are provided with an electronic program control (6a-d), the domestic appliances (1, 2, 3, 4) being interconnected with one another and with a central master computer (7) via a data transmission installation (5), and program and appliance data being recallable from the program controls (6a-d) by the master computer (7), characterised in that a transmission installation (9) for the wireless transmission of the data is disposed in the master computer (7) and is in radio link with a receiver (11) of a display device (10).

2. Central controlling and monitoring installation for domestic appliances (1, 2, 3, 4) according to claim 1, characterised in that the display device includes a device (14) for the processing of the received data.

3. Central controlling and monitoring installation for domestic appliances (1, 2, 3, 4) according to claim 1, characterised in that the master computer (7) is associated with a control unit for the processing of the received data.

4. Central controlling and monitoring installation for domestic appliances (1, 2, 3, 4) according to claim 3, characterised in that the master computer is in the form of a personal computer (7, 8) with a transmitter (9) incorporated therein.

5. Central controlling and monitoring installation for domestic appliances (1, 2, 3, 4) according to at least one of claims 1 to 4, characterised in that the power supply system (5) is used as the data transmission installation for the supply of power to the domestic appliances, a modulated carrier frequency being superimposed on the system voltage flowing there.

6. Central controlling and monitoring installation for domestic appliances (1, 2, 3, 4) according to at least one of claims 1 to 4, characterised in that an additional data line is used as the data transmission installation.

7. Central controlling and monitoring installation for domestic appliances (1, 2, 3, 4) according to at least one of claims 1 to 4, characterised in that a wireless transmission installation in the form of an infra-red or radio-transmitting/receiving installation is used as the data transmission installation.

## Revendications

1. Module de commande et de surveillance central pour appareils électroménagers tels que lessiveuses (3), séchoirs (2), cuisinières (1), réfrigérateurs (4) ou lave-vaisselle, équipés d'une commande par programme électronique (6a-d), module avec lequel les appareils électroménagers (1, 2, 3, 4) sont en liaison entre eux et avec un ordinateur pilote central (7) par l'intermédiaire d'un dispositif de transmission de données (5), et des données concernant le programme et les appareils peuvent être extraites des commandes par programme par l'ordinateur pilote (7), caractérisé en ce que dans l'ordinateur pilote (7), on a implanté un dispositif émetteur (9) pour une transmission sans fil des données, qui est en liaison radio avec un récepteur (11) d'un dispositif d'affichage (10).

2. Module de commande et de surveillance central pour appareils électroménagers (1, 2, 3, 4) selon la revendication 1, caractérisé en ce que le dispositif d'affichage comporte un dispositif (14) pour la préparation des données reçues.

3. Module de commande et de surveillance central pour appareils électroménagers (1, 2, 3, 4) selon la revendication 1, caractérisé en ce qu'une unité de commande pour la préparation des données reçues est associée à l'ordinateur pilote (7).

4. Module de commande et de surveillance central pour appareils électroménagers (1, 2, 3, 4) selon la revendication 3, caractérisé en ce que l'ordinateur pilote adopte la forme d'un ordinateur personnel (7, 8) à émetteur intégré (9).

5. Module de commande et de surveillance central pour appareils électroménagers (1, 2, 3, 4) selon au moins l'une des revendications 1 à 4, caractérisé en ce qu'en tant que dispositif de transmission de données, on utilise le réseau de distribution d'énergie électrique (5) alimentant les appareils électroménagers en courant électrique, une fréquence porteuse modulée étant en ce cas superposée à la tension de réseau qui s'y écoule.

6. Module de commande et de surveillance central pour appareils électroménagers (1, 2, 3, 4) selon au moins l'une des revendications 1 à 4, caractérisé en ce qu'on utilise une ligne de données supplémentaire en tant que dispositif de transmission de données.

7. Module de commande et de surveillance central pour appareils électroménagers (1, 2, 3, 4) selon au moins l'une des revendications 1 à 4, caractérisé en ce qu'on utilise un dispositif de transmission sans fil sous forme de dispositif émetteur/récepteur infrarouge ou radio en tant que dispositif de transmission de données.
